# EUROPEAN PATENT APPLICATION

(11) **EP 4 809 855 A2**
(43) Date of publication of application: **23.09.2026**
(21) Application number: 26196301.1
(22) Date of filing: 30.08.2023
(51) Int. Cl.: A45C 7/00, A45C 13/26, A45C 13/22, A45C 13/38, A45C 5/14, B62B 5/00, B63C 9/02, A45C 9/00

(54) **CONVERTIBLE PACK SYSTEMS AND METHODS**

(30) Priority: 31.08.2022 US 202263402755 P
(62) Document number(s) of the earlier application(s) in accordance with Art. 76 EPC: 23776746.2 / 4 580 463
(71) Applicant: W. L. Gore & Associates, Inc., Newark, DE 19711 (US)
(72) Inventor: BARKLOW, John P., Newark, DE 19711 (US)
(74) Representative: HGF

(57) **Abstract**

Pack systems are convertible or transitionable to different configurations in which the systems may be used in different manners. These different manners include using the systems similarly to typical luggage, using the systems similarly to typical backpacks, pulling the systems similarly to a typical sled, using the systems as seats in rafts, and/or using the systems as supports for tables. Pack systems also facilitate replacement of typically relatively easily damaged components, such as wheels and handles.

## Description

### CROSS-REFERENCE TO RELATED APPLICATION

This application claims the benefit of Provisional Application No. 63/402,755, filed August 31, 2022, which is incorporated herein by reference in its entirety for all purposes.

### FIELD

The present disclosure relates generally to pack systems for transporting one or more items. More specifically, the disclosure relates to convertible and repairable pack systems and methods.

### BACKGROUND

Pack systems, also referred to as luggage, are used during travel to transport one or more items, such as clothing, hunting equipment, camping equipment, travel equipment, or the like. Such pack systems typically include wheels and handles to facilitate system movement by travelers. Such handles are typically movable or reconfigurable to provide selective compactness.

### SUMMARY

Pack systems, according to some embodiments, are convertible or transitionable to different configurations in which the systems may be used in different manners. These different manners include, for example, using the systems similarly to typical luggage, using the systems similarly to typical backpacks, pulling the systems similarly to a typical sled, using the systems as seats in rafts, and/or using the systems as supports for tables. Pack systems, according to some embodiments, additionally or alternatively facilitate replacement of relatively easily damaged components, such as wheels and handles.

According to one example ("Example 1"), a handle assembly includes: a handle including a hand grip, a base including a pivot shaft, and a shank extending between the hand grip and the base; and a coupling module configured to releasably couple the handle base to a frame of a luggage system such that the handle can be pivoted, the coupling module including: a receiver including a first collar with a first mouth, the pivot shaft receivable in the first mouth of the first collar, and a lock mechanism releasably securable to at least one of the receiver and the pivot shaft such that the pivot shaft is secured in the first mouth of the collar, the lock mechanism including a latch is manually operable to lock and unlock the lock mechanism.

According to another example ("Example 2"), the handle assembly of Example 1, wherein the shank of the handle includes a first leg and a second leg, the first and second legs extending between the hand grip and the base.

According to another example ("Example 3"), the handle assembly of Examples 1 or 2, wherein the pivot shaft is cylindrical in shape.

According to another example ("Example 4"),the handle assembly of any of Examples 1 to 3, wherein the receiver further includes a second collar with a second mouth, the pivot shaft receivable in the second mouth of the second collar.

According to another example ("Example 5"), the handle assembly of Example 4, wherein the first and second collars are interconnected by a backing member.

According to another example ("Example 6"), the handle assembly of any of Examples 1 to 5, wherein the coupling module is receivable over the pivot shaft and the first collar, and the latch is operable to engage with and disengage from the pivot shaft to retain and release, respectively, the coupling module over the pivot shaft and the first collar upon actuating the latch.

According to another example ("Example 7"), a pack system includes: a frame including a body including a back side, a front side, and a first aperture extending through the body; and a handle assembly including: a handle including a hand grip, a base including a pivot shaft, and a shank extending between the hand grip and the base; and a coupling module configured to releasably couple the handle base to the body of the frame such that the handle can be pivoted, the coupling module including: a receiver including a first collar received through the first aperture of the body of the frame, the first collar including a first mouth, the pivot shaft pivotably received in the first mouth of the first collar, and a lock mechanism releasably secured to at least one of the receiver and the pivot shaft such that the pivot shaft is secured in the first mouth of the collar, the lock mechanism including a latch that is manually operable to lock and unlock the lock mechanism.

According to another example ("Example 8"), the pack system of Example 7, wherein the body of the frame includes a second aperture, and the receiver further includes a second collar with a second mouth, the pivot shaft received in the second mouth of the second collar.

According to another example ("Example 9"), the pack system of Example 8, wherein the first and second apertures pass through the body of the frame, and further wherein the first and second collars are interconnected by a backing member, the backing member engaging the front side of the body of the frame and the first and second collars projecting through the first and second apertures away from the back side of the body of the frame.

According to another example ("Example 10"), the pack system of any of Examples 7 to 9, wherein the coupling module includes a body portion received over the pivot shaft and the first collar, and the lock mechanism includes a latch releasably engaged with the pivot shaft to releasably retain the body portion over the pivot shaft and the first collar such that the handle assembly is releasably secured to the body of the frame.

According to another example ("Example 11"), the pack system of any of Examples 7 to 10, wherein the back side of the body of the frame defines a recessed area, and further wherein the handle of the handle assembly is pivotable into the recessed area of the body.

According to another example ("Example 12"), the pack system of any of Examples 7 to 11, wherein the handle of the handle assembly is pivotable through an angle of 90 degrees or more.

According to another example ("Example 13"), the pack system of any of Examples 7 to 12, wherein the handle of the handle assembly is pivotable through an angle of about 180 degrees.

According to another example ("Example 14"), the pack system of any of Examples 7 to 13, wherein the handle is pivotable flat against the back side of the body of the frame.

According to another example ("Example 15"), a pack system includes: a frame including a body; and a handle assembly including: a handle including a hand grip, a base, and a shank extending between the hand grip and the base, and a coupling module configured to releasably couple the base of the handle to the body of the frame such that the handle can be pivoted between a first angular position and a second angular position, wherein the first and second angular positions are angularly offset by 90 degrees or more, the coupling module being manually releasable to uncouple the handle assembly from the body of the frame.

According to another example ("Example 16"), the pack system of Example 15, wherein the body includes a top, a bottom, a back side, and a front side, the handle assembly being coupled to the body by the coupling module such that the handle is pivotable toward the bottom of the body against the back side of the body.

According to another example ("Example 17"), the pack system of Examples 15 or 16, wherein the handle is pivotable toward the top of the body against the back side of the body such that the handle extends beyond the top of the body.

According to another example ("Example 18"), the pack system of any of Examples 15 to 17, wherein the back side of the body defines a recessed area sized and shaped to receive the handle.

According to another example ("Example 19"), the pack system of any of Examples 7 to 18, further including a pack assembly releasably coupled to the frame.

According to another example ("Example 20"), the pack system of Example 19, wherein the pack assembly includes a track and the body of the frame includes a rail, the track and the rail being slidably mated such that the pack assembly is coupled to the frame.

According to another example ("Example 21"), the pack system of Example 20, wherein the body of the frame includes a back side of the body, and a foot portion projecting from the back side of the body, the foot portion defining the bottom of the body.

According to another example ("Example 22"), the pack system of Example 21, wherein the pack assembly is slidably mated over the rail and against the foot portion.

According to another example ("Example 23"), a pack system includes: a frame including a body including a longitudinal mid-line, the body including a bottom, a back side, and a bottom corner between the bottom and back side; and a wheel module positioned toward the bottom corner of the body, the wheel module including: a bracket coupled to the body of the frame, an axle received through the bracket, a plurality of roller elements rotatably received on the axle, and a securing element being manually releasable such that the axle and the plurality of roller elements can be disassembled from the body of the frame.

According to another example ("Example 24"), the pack system of Example 22, wherein the bracket is releasably secured to the body of the frame.

According to another example ("Example 25"), the pack system of Examples 23 or 24, wherein the securing element is a fastener.

According to another example ("Example 26"), the pack system of any of Examples 23 to 25, wherein the axle includes a hollow interior that is accessible to a user without removing the axle from the body.

According to another example ("Example 27"), the pack system of any of Examples 23 to 26, wherein the plurality of roller elements includes a first side wheel, a second side wheel, and a central roller, the first and second side wheels rotatably positioned on the axle on opposite sides of the central roller.

According to another example ("Example 28"), the pack system of any of Examples 23 to 27, wherein the axle is detachably mounted to the body by rotatably securing the securing element to the axle.

According to another example ("Example 29"), the pack system of any of Examples 27 or 28, wherein the bracket is a first bracket, further including a second bracket coupled to the body of the frame, and wherein the central roller extends from the first bracket to the second bracket.

According to another example ("Example 30"), a pack system includes: a frame including a body including a longitudinal mid-line, the body including a height and a width and including a bottom, a back side, and a bottom corner between the bottom and back side; and a wheel module positioned toward the bottom corner of the body, the wheel module including: an axle arranged along the width of the body, and a wheel assembly positioned at the bottom of the body, wheel assembly being rotatably mounted on the axle, the wheel assembly including a central roller and a pair of wheels each including a larger diameter than central roller.

According to another example ("Example 31"), the pack system of Example 30, wherein the central roller includes roller tread features.

According to another example ("Example 32"), the pack system of Examples 30 or 31, wherein the pair of wheels each includes a diameter that is larger than the central roller by at least 10%.

According to another example ("Example 33"), the pack system of any of Examples 30 to 32, wherein the central roller includes a first end and a second end, and further wherein the central roller defines a continuous diameter between the first end and the second end.

According to another example ("Example 34"), a pack system includes: a frame including, a body including a longitudinal mid-line and a width, the body including a bottom, a back side and a bottom corner between the bottom and back side; and a wheel module positioned toward the bottom corner of the body, the wheel module including: an axle extending along the width of the body, and a wheel assembly positioned at the bottom of the body, wheel assembly being rotatably mounted on the axle, the wheel assembly including a central roller and a pair of wheels, each of the pair of wheels being tapered in diameter.

According to another example ("Example 35"), the pack system of Example 34, wherein each of the pair of wheels tapers from a first, outer diameter to a second, inner diameter that is less than the first, outer diameter.

According to another example ("Example 36"), the pack system of Example 35, wherein the second, inner diameter of each of the pair of wheels corresponds to a diameter of the central roller.

According to another example ("Example 37"), a pack system includes: a frame including a body including a longitudinal mid-line and a width, the body including a bottom, a back side, and a bottom corner between the bottom and back side; and a wheel module positioned toward the bottom corner of the body, the wheel module including: an axle extending along a width of the body, and a wheel assembly positioned at the bottom of the body, wheel assembly being rotatably and removably mounted on the axle, the wheel assembly including a pair of wheels arranged in an opposing fashion, each tapering toward the other from a first, larger diameter to a second, smaller diameter.

According to another example ("Example 38"), the pack system of Example 37, wherein the first, larger diameter is at least 10% greater than the second, smaller diameter.

According to another example ("Example 39"), the pack system of Examples 37 or 38, further including a central roller positioned between the pair of wheels.

According to another example ("Example 40"), the pack system of Example 39, wherein the central roller includes the shape of an elongate cylinder that defines an outer diameter, and further wherein the outer diameter of the central roller corresponds to the second, smaller diameter.

According to another example ("Example 41"), a wheel module replacement kit for a pack system, the kit includes: an axle; a wheel assembly configured to be rotatably mountable on the axle, the wheel assembly including a plurality of wheels having different features wherein the wheel features include wheel diameters tapering from a first larger diameter to a second, smaller diameter, and the wheel features further including one or more of wheel diameter, wheel shape, wheel material, and wheel tread type; and a fastener coupleable to at least one of the plurality of wheels to secure a pair of the interchangeable wheels to the axle.

According to another example ("Example 42"), the wheel module replacement kit of Example 41, further including a central roller that is elongate and cylindrical in shape.

According to another example ("Example 43"), the wheel module replacement kit of Example 41, further including a plurality of interchangeable central rollers including different features selected from one or more of roller diameter, roller shape, roller material, roller tread type, and roller length.

According to another example ("Example 44"), a method of changing a wheel module of a pack system, the method includes: releasing a fastener of the wheel module from a first wheel of a pair of wheels of the wheel module; removing the first wheel of the pair of wheels from an axle that extends a width of a body of a frame of the pack system; removing a second wheel of the pair of wheels of the wheel module from the axle; coupling a first replacement wheel and a second replacement wheel to the axle, the first and second replacement wheels including different features from the first and second wheels selected from one or more of wheel diameter, wheel shape, wheel material, and wheel tread type; and securing the fastener of the wheel module to the first replacement wheel.

According to another example ("Example 45"), the method of Example 44, further including securing a central roller that is elongate and cylindrical in shape between the first and second replacement wheels.

According to another example ("Example 46"), the method of Example 45, further including selecting the central roller from a plurality of interchangeable central rollers including different features selected from one or more of roller diameter, roller shape, roller material, roller tread type, and roller length.

According to another example ("Example 47"), the pack system of any of Examples 23 to 40, further including a pack assembly releasably coupled to the frame.

According to another example ("Example 48"), the pack system of any of Examples 23 to 40, further including a pack assembly releasably coupled to the frame.

According to another example ("Example 49"), the pack system of Example 48, wherein the pack assembly includes a track and the body of the frame includes a rail, the track and the rail being slidably mated such that the pack assembly is coupled to the frame.

According to another example ("Example 50"), the pack system of Example 49, wherein the body of the frame includes a back side, and a foot portion projecting from the back side of the body, the foot portion defining the bottom of the body.

According to another example ("Example 51"), the pack system of Example 50, wherein the pack assembly is slidably mated over the rail and against the foot portion.

According to another example ("Example 52"), a pack system includes: a frame including a body including a bottom, a back, and a bottom corner between the bottom and back, the back and the bottom frame defining a receiving space; and a pack assembly releasably coupled in the receiving space of the frame, the pack assembly includes: a shell including an interior space defining a height dimension, a width dimension and a length dimension, and an overall shape, and an access opening that is able to be opened and closed to permit and restrict access to the interior space; and an inner table including a surface having a top and a bottom and a plurality of supports extending from the bottom of the surface, the inner table defining an overall height and a free space between the plurality of supports and the bottom of the surface, the inner table being receivable entirely within the interior space of the shell and the plurality of supports being receivable entirely within the receiving space of the frame.

According to another example ("Example 53"), the pack system of Example 52, wherein the inner table is able to be positioned in the interior space with the access opening closed with plurality of supports in a first orientation as well as with the plurality of supports in a second orientation that is inverted relative to the first orientation.

According to another example ("Example 54"), the pack system of Examples 52 or 53, wherein the plurality of supports are spaced apart to span the width and length dimensions of the interior space of the shell.

According to another example ("Example 55"), the pack system of any of Examples 52 to 54, wherein the surface includes an outer profile that corresponds to the overall shape of the interior space to define a complementary fit between the surface and the interior space of the shell.

According to another example ("Example 56"), the pack system of any of Examples 52 to 55, wherein the overall height of the inner table spans between 10% and 100% of the height dimension of the interior space.

According to another example ("Example 57"), the pack system of any of Examples 52 to 56, wherein the free space is between 5% and 95% of the interior space.

According to another example ("Example 58"), the pack system of any of Examples 52 to 57, wherein the table is formed of a material resistant to deformation at a temperature of 100 degrees Celsius.

According to another example ("Example 59"), the pack system of any of Examples 52 to 58, wherein the table is able to support 2 to 100 kilograms (kg).

According to another example ("Example 60"), a pack system includes: a frame including a body including a bottom, a top, a back side, and a bottom corner between the bottom and back side, the top and bottom curving away from the back to define a receiving space; a wheel module positioned toward the bottom corner of the body; and a pack assembly releasably coupled in the receiving space of the frame.

According to another example ("Example 61"), the pack system of Example 60, wherein the back side is configured to lay flat on a flat surface.

According to another example ("Example 62"), the pack system of Example 60 or 61, the back side including a plurality of ridges to reduce sliding friction of the frame over a surface.

According to another example ("Example 63"), the pack system of any of Examples 60 to 62, the body including a plurality of apertures, the system further including a strap harness assembly secured to the body through the plurality of apertures.

According to another example ("Example 64"), the pack system of Example 63, the system further including a tether assembly secured to the body through the plurality of apertures.

According to another example ("Example 65"), the pack system of any of Examples 60 to 64, wherein the system further includes a raft, the raft including a seating area, the frame defining a complementary fit to the seating area of the raft.

According to another example ("Example 66"), a method of transitioning a pack system from a first luggage configuration to a second pack configuration, the method includes: detaching a pack assembly from a receiving space of a frame, the frame comprising a body having a bottom, a top, a back side, and a bottom corner between the bottom and back side, the top and bottom curving away from the back to define the receiving space; and securing at least one of a strap harness assembly and a tether assembly to at least one of the frame and the pack assembly.

According to another example ("Example 67"), the method of Example 66, wherein the body of the frame comprises a plurality of apertures, the strap harness assembly being secured to the body through the plurality of apertures.

According to another example ("Example 68"), the method of Examples 66 or 67, wherein the body comprises a plurality of tether apertures at the top of the body, the tether assembly being secured to the body of the frame through the tether apertures.

According to another example ("Example 69"), the method of Examples 66 to 68, wherein detaching the pack assembly from the receiving space of the frame includes sliding a track of the pack assembly along a rail of the frame, the track and rail forming a complementary fit such that the track and rail are releasably attached, until the track and rail are released from one another.

According to another example ("Example 70"), the method of Examples 66 to 69, wherein the body of the frame comprises a back side, and a foot portion projecting from the back side of the body, the foot portion defining the bottom of the body and the back side of the body defines a first edge and a second edge, and the pack assembly is slidably mated over the first and second edges and against the foot portion of the body of the frame, and further wherein detaching the pack assembly from the frame comprises sliding the pack assembly from the frame.

According to another example ("Example 71"), the method of any of Examples 66 to 70, further comprising securing a load in the receiving space of the frame.

The foregoing Examples are just that, and should not be read to limit or otherwise narrow the scope of any of the inventive concepts otherwise provided by the instant disclosure. While multiple examples are disclosed, still other embodiments will become apparent to those skilled in the art from the following detailed description, which shows and describes illustrative examples. Accordingly, the drawings and detailed description are to be regarded as illustrative in nature rather than restrictive in nature.

### BRIEF DESCRIPTION OF THE DRAWINGS

The accompanying drawings are included to provide a further understanding of the disclosure and are incorporated in and constitute a part of this specification, illustrate embodiments, and together with the description serve to explain the principles of the disclosure.
FIG. 1 is a perspective view of a convertible pack system in a first luggage configuration, according to some embodiments.
FIG. 2 is a perspective view of the pack system of FIG. 1 being transitioned from the first luggage configuration to a second pack configuration.
FIG. 3 is a perspective view of a frame and a handle assembly of a convertible pack system, according to some embodiments.
FIG. 4 is a partial exploded perspective view of the frame and the handle assembly of FIG. 3.
FIG. 5 is a partial perspective view of the frame and the handle assembly of FIG. 3; a clasp and a pivot shaft are shown in phantom lines.
FIGS. 6-10 are partial perspective views of actions associated with a method of detaching the handle assembly from the frame.
FIG. 11 is a partial exploded perspective view of the frame and a wheel module of FIG. 3.
FIG. 12 is another partial exploded perspective view of the frame and the wheel module of FIG. 3.
FIG. 13 is a side view of the convertible pack system of FIG. 1 in a second pack configuration.
FIG. 14 is a perspective view of the convertible pack system of FIG. 1 in a third sled configuration.
FIG. 15 is a perspective view of the pack system of FIG. 1 being transitioned to a fourth raft configuration.
FIG. 16 is a perspective view of the pack system of FIG. 1 in the fourth raft configuration.
FIG. 17 is a perspective view of the pack system of FIG. 1 in a fifth table configuration.
FIG. 18 is a perspective view of a table of the pack system of FIG. 1.
FIG. 19 is a perspective view of the pack system of FIG. 1 with the table of FIG. 18 being positioned in a pack assembly.
FIG. 20 is a side view of a convertible pack system in a collapsed configuration, according to some embodiments.
FIG. 21 is a side view of the convertible pack system of FIG. 20 in an expanded configuration.
FIG. 22 is a bottom perspective view of a pack system frame, illustrating my new design.
FIG. 23 is a top view thereof.
FIG. 24 is a bottom view thereof.
FIG. 25 is a right side view thereof.
FIG. 26 is a left side view thereof.
FIG. 27 is a front view thereof.
FIG. 28 is a rear view thereof.
FIG. 29 is a top perspective view thereof.

### DETAILED DESCRIPTION

### Definitions and Terminology

This disclosure is not meant to be read in a restrictive manner. For example, the terminology used in the application should be read broadly in the context of the meaning those in the field would attribute such terminology.

With respect to terminology of inexactitude, the terms "about" and "approximately" may be used, interchangeably, to refer to a measurement that includes the stated measurement and that also includes any measurements that are reasonably close to the stated measurement. Measurements that are reasonably close to the stated measurement deviate from the stated measurement by a reasonably small amount as understood and readily ascertained by individuals having ordinary skill in the relevant arts. Such deviations may be attributable to measurement error, differences in measurement and/or manufacturing equipment calibration, human error in reading and/or setting measurements, minor adjustments made to optimize performance and/or structural parameters in view of differences in measurements associated with other components, particular implementation scenarios, imprecise adjustment and/or manipulation of objects by a person or machine, and/or the like, for example. In the event it is determined that individuals having ordinary skill in the relevant arts would not readily ascertain values for such reasonably small differences, the terms "about" and "approximately" can be understood to mean plus or minus 10% of the stated value.

### Description of Various Embodiments

Persons skilled in the art will readily appreciate that various aspects of the present disclosure can be realized by any number of methods and apparatuses configured to perform the intended functions. It should also be noted that the accompanying drawing figures referred to herein are not necessarily drawn to scale, but may be exaggerated to illustrate various aspects of the present disclosure, and in that regard, the drawing figures should not be construed as limiting.

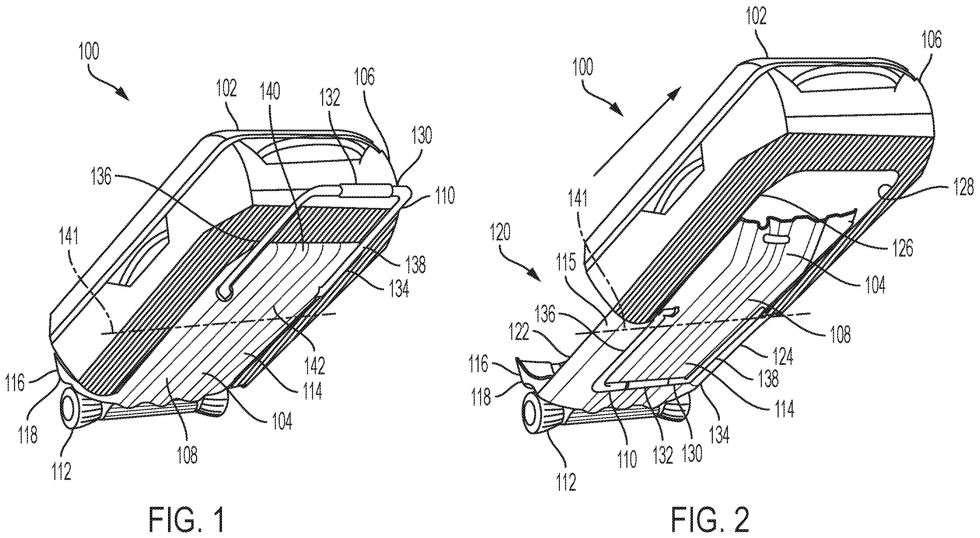

FIGS. 1 and 2 illustrate a convertible pack system 100, according to some embodiments. The pack system 100 generally includes a pack assembly 102 that releasably couples to a frame 104. The pack assembly 102 may be constructed of various materials, such as one or more fabrics, plastics, metals, composites, or the like. The pack assembly 102 includes a shell 106 having one or more access openings (not shown). The access openings are selectively openable and closeable to permit and restrict access, respectively, to one or more interior spaces (not shown) of the shell 106. When the access openings are open, one or more items (not shown) may be positioned in the interior spaces. Various types of items may be positioned in the interior spaces, such as clothing, hunting equipment, camping equipment, travel equipment, or the like.

The frame 104 may be constructed of various materials, such as one or more plastics, metals, composites, or the like. The frame 104 includes a body 108 that couples to a handle assembly 110 to facilitate pulling and/or lifting the pack system 100. The body 108 of the frame 104 also couples to a wheel module 112 to facilitate moving the pack system 100 across various types of surfaces, including outdoor surfaces and indoor surfaces. The body 108 of the frame 104 includes a sled portion 114 that defines a front side 115 (FIG. 2) and a back side 142 of the frame 104. A foot portion 116 projects away from the sled portion 114, and the foot portion 116 defines a bottom 118 of the body 108. The sled portion 114 and the foot portion 116 define a receiving space 120 (FIG. 2) for selectively receiving the pack assembly 102.

With continued reference to FIGS. 1 and 2, the pack system 100 is convertible or transitionable to different configurations in which the pack system 100 may be used in different manners. For example, FIG. 1 illustrates the pack system 100 in a first luggage configuration in which the pack assembly 102 is releasably coupled to the frame 104. FIG. 2 illustrates the pack system 100 being transitioned from the first luggage configuration to a second pack configuration, or a configuration in which the pack assembly 102 is detached from the frame 104. Such configurations are described in further detail below. To facilitate such transition, however, the sled portion 114 of the frame 104 may define a first edge 122 and a second edge 124 (both shown in FIG. 2), and the pack assembly 102 may slidably mate over the first edge 122 and the second edge 124 and against the foot portion 116 of the frame 104. Stated another way, the pack assembly 102 includes a first track 126 and a second track 128 (both shown in FIG. 2), the body 108 of the frame 104 includes a first rail 122 and a second rail 124, and the first track 126 and the second track 128 slidably mate with the first rail 122 and a second rail 124, respectively, to couple the pack assembly 102 to the frame 104.

With further reference to FIGS. 1 and 2 and as briefly described above, the handle assembly 110 facilitates pulling and/or lifting the pack system 100. The handle assembly 110 includes a handle 130, optionally having a hand grip 132, and a shank 134 extending from the handle 130 to the body 108 of the frame 104. The shank 134 is pivotably coupled to the body 108 of the frame 104. The shank 134 illustratively includes a first leg 136 and a second leg 138 that extend between the hand grip 132 and the body 108 of the frame 104. Alternatively, the shank 134 includes a single leg that extends between the hand grip 132 and the body 108 of the frame 104.

The handle 130 is pivotable relative to the frame 104, for example, through an angle of 90 degrees or more, more specifically through an angle of about 180 degrees. Stated another way, the handle 130 may be pivoted between a first angular position (FIG. 1) and a second angular position (FIG. 2). The first and second angular positions may be angularly offset by 90 degrees or more, more specifically by about 180 degrees. In the first angular position, the handle 130 may be pivoted toward a top 140 of the body 108 of the frame 104 and against the back side 142 of the body 108 such that the handle 130 extends beyond the top 140 of the body 108. Similarly, in the first angular position the hand grip 132 is positioned on a first side of a longitudinal mid-line 141 of the body 108 of the frame 104. In the second angular position, the handle 130 may be pivoted flat against the back side 142 of the body 108 of the frame 104. Similarly, in the second angular position the hand grip 132 is positioned on a second side of the longitudinal mid-line 141 of the body 108 of the frame 104. In some cases, the shank 134 is extendable and collapsible to facilitate selectively varying the length of the handle 130.

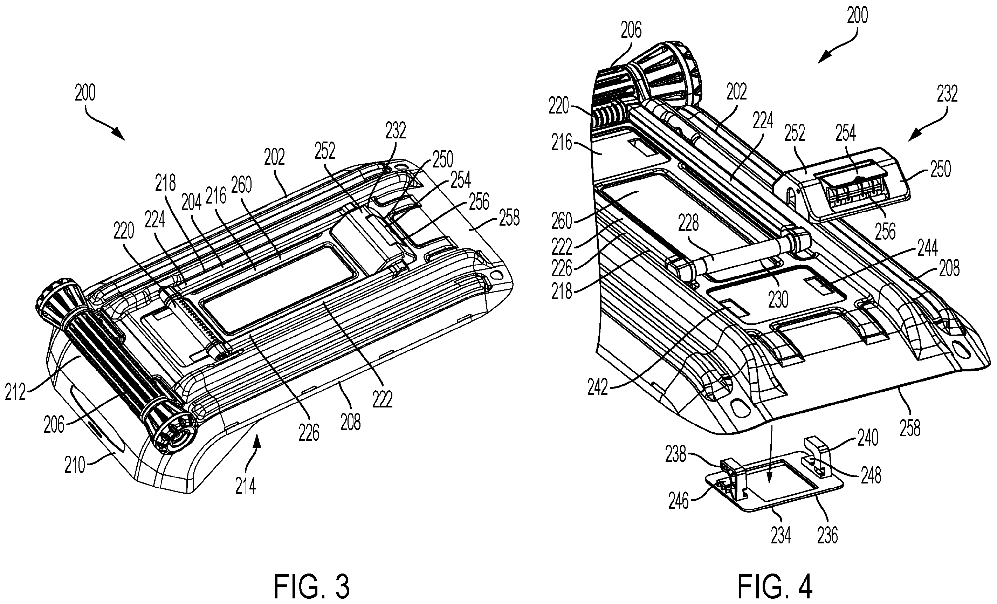

The convertible pack system 100 shown in FIGS. 1 and 2 is provided as an example of the various features of the convertible pack system and, although the combination of those illustrated features is clearly within the scope of invention, that example and its illustration is not meant to suggest the inventive concepts provided herein are limited from fewer features, additional features, or alternative features to one or more of those features shown in FIGS. 1 and 2. For example, in various embodiments, the frame 104 of the pack system 100 shown in FIGS. 1 and 2 may include the handle assembly 204 described with reference to FIGS. 3 and 4. It should also be understood that the reverse is true as well. That is, one or more of the components depicted in FIGS. 1 and 2 can be employed in addition to, or as an alternative to components depicted in FIGS. 3 and 4.

FIGS. 3 and 4 illustrate a frame 200 of a convertible pack system, according to some embodiments. The frame 200 is configured to releasably couple to a pack assembly (not shown), such as the pack assembly 102 described elsewhere. The frame 200 may be constructed of various materials, such as one or more plastics, metals, composites, or the like. The frame 200 includes a body 202 that couples to a handle assembly 204 and a wheel module 206. The body 202 of the frame 200 includes a sled portion 208 that defines a front side (not shown) of the frame 200. A foot portion 210 (FIG. 3) projects away from the sled portion 208, and the foot portion 210 defines a bottom 212 of the body 202. The sled portion 208 and the foot portion 210 define a receiving space 214 (FIG. 3) for selectively receiving a pack assembly.

The handle assembly 204 is positioned on a back side 216 of the body 202 of the frame 200. The handle assembly 204 includes a handle 218 having a hand grip 220, and a shank 222 extends from the hand grip 220 toward the body 202 of the frame 200. The shank 222 includes a first leg 224 and a second leg 226 that extend between the hand grip 220 and the body 202 of the frame 200. The shank 222 couples to a base 228 (FIG. 4) of the handle 218 near the body 202 of the frame 200. The base 228 includes a pivot shaft 230 (FIG. 4), which may be cylindrical in shape. A coupling module 232 releasably couples the pivot shaft 230 to the body 202 of the frame 200. The pivot shaft 230 may be pivotable relative to the coupling module 232, or the shank 222 may be pivotable relative to the pivot shaft 230. In either case, the pivot shaft 230 and the coupling module 232 facilitate pivoting the handle 218 relative the body 202 of the frame 200. In some cases, the shank 232 is extendable and collapsible to facilitate selectively varying the length of the handle 218.

With continued reference to FIGS. 3 and 4, the coupling module 232 includes a receiver 234 (FIG. 4) having a backing member 236 and a first collar 238 and a second collar 240 interconnected by the backing member 236. The backing member 236 engages the front side (not shown) of the body 202 of the frame 200, the first collar 238 projects through a first aperture 242 (FIG. 4) formed on the body 202, and the second collar 240 projects through a second aperture 244 (FIG. 4) formed on the body 202. The first collar 238 and the second collar 240 thereby extend away from the back side 216 of the body 202 of the frame 200. Alternatively, the receiver 234 could take other forms. For example, the receiver 234 could include the backing member 236 and a single collar, such as the first collar 238. As another example, the receiver 234 could include two or more backing members, and each backing member could couple to one or more collars.

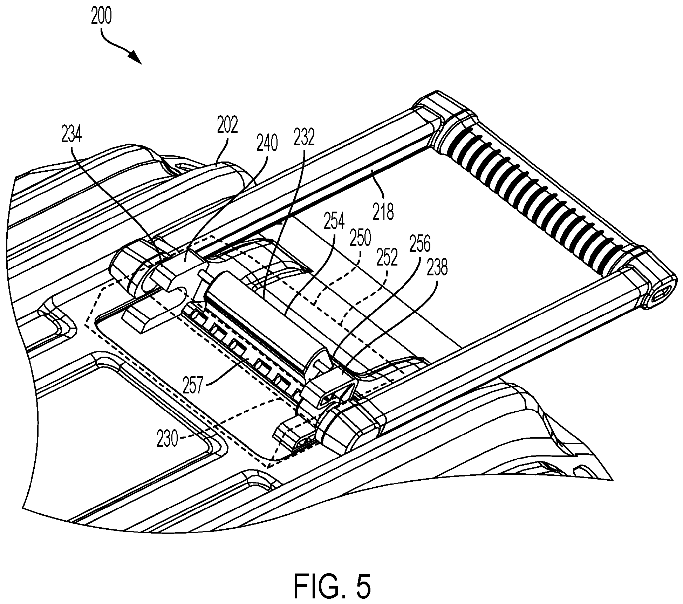

The pivot shaft 230 is receivable in a first mouth 246 of the first collar 238 and a second mouth 248 of the second collar 240. The coupling module 232 further includes a clasp 250 having a body portion 252 and a lock mechanism 254. The body portion 252 is receivable over the pivot shaft 230, the first collar 238, and the second collar 240. With additional reference to FIG. 5, the lock mechanism 254 of the clasp 250 includes a release lever 256 and a latch 257. The release lever 256 is manually operable, more specifically, manually pivotable relative to the body portion 252 of the clasp 250, to cause the latch 257 to engage and disengage the pivot shaft 230 and/or the receiver 234. The lock mechanism 254 thereby retains and releases, respectively, the body portion 252 of the clasp 250 over the pivot shaft 230, the first collar 238, and the second collar 240, and the coupling module 232 thereby couples and uncouples, respectively, the handle 218 to the body 202 of the frame 200.

Referring again to FIGS. 3 and 4, the handle 218, when secured to the body 202 of the frame 200 via the coupling module 232, is pivotable relative to the frame 200, for example, through an angle of 90 degrees or more, more specifically through an angle of about 180 degrees. Stated another way, the handle 218 may be pivoted between a first angular position (not shown) and a second angular position (FIGS. 3). The first and second angular positions may be angularly offset by 90 degrees or more, more specifically by about 180 degrees. In the first angular position, the handle 218 may pivot toward a top 258 of the body 202 of the frame 200 and against the back side 216 of the body 202 such that the handle 218 extends beyond the top 258 of the body 202. In the second angular position, the handle 218 may pivot flat against the back side 216 of the body 202 of the frame 200. In the second angular position, the handle 218 may pivot into a recessed area 260 of the back side 216 of the body 202 of the frame 200.

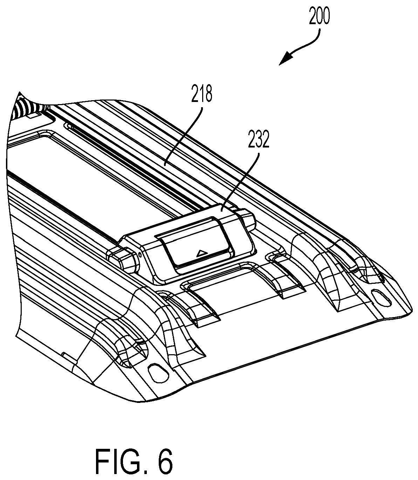

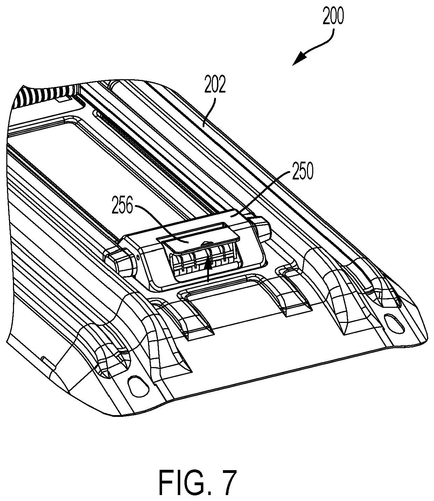

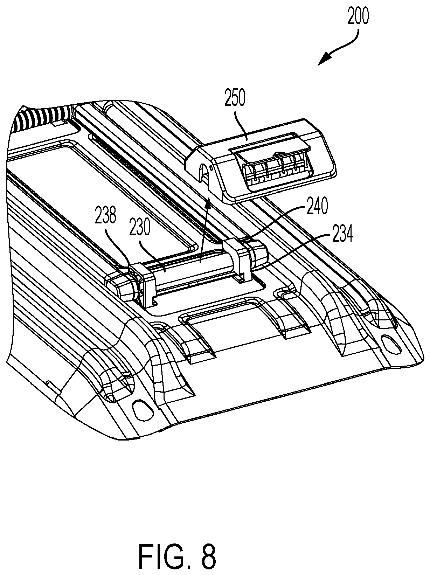

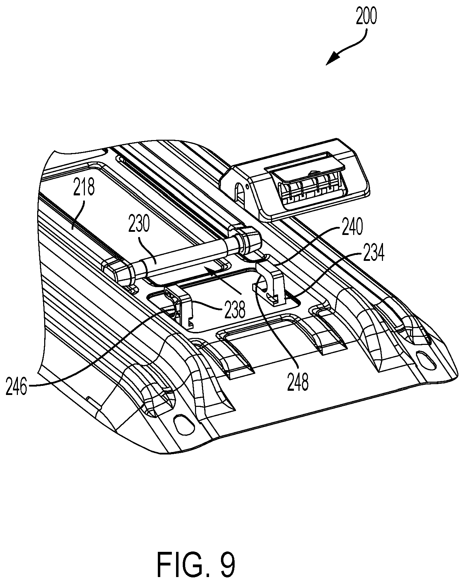

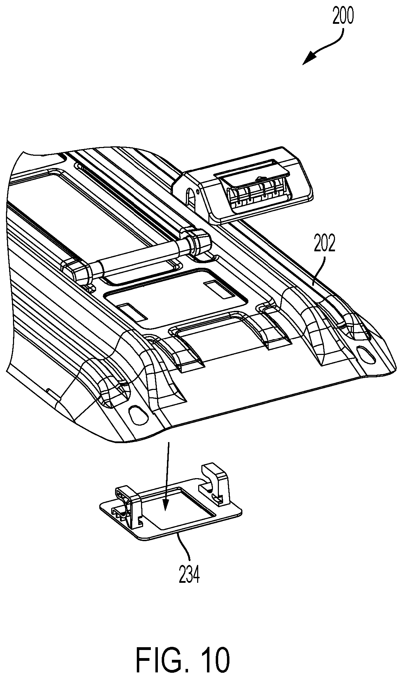

FIGS. 5-10 illustrate actions associated with a method of detaching the handle assembly 204 from the frame 200, according to some embodiments. Such a method may facilitate, for example, transitioning the pack system to a different configuration or replacing damaged or worn components of the handle assembly 204. As shown in FIG. 6, the method begins with the handle 218 secured to the frame 200 via the coupling module 232. Next and as shown in FIG. 7, the release lever 256 is manually operated, more specifically, manually pivoted away from the body 202 of the frame 200. This action causes the latch 257 (FIG. 5) to disengage the pivot shaft 230 and/or the receiver 234 (both shown elsewhere) and thereby release the clasp 250 from the pivot shaft 230, the first collar 238, and the second collar 240 of the receiver 234 (shown elsewhere). As shown in FIG. 8, the clasp 250 is then moved apart from the pivot shaft 230, the first collar 238, and the second collar 240 of the receiver 234. Next and as shown in FIG. 9, the handle 218 is moved apart from the receiver 234 such that the pivot shaft 230 moves apart from the first mouth 246 of the first collar 238 and the second mouth 248 of the second collar 240. As shown in FIG. 10, the receiver 234 is then moved apart from the body 202 of the frame 200. The frame 200 may then be used in a different configuration, or one or more components of the handle assembly 204 may be replaced. The handle assembly 204 may be coupled to the frame 200 by performing the opposite actions.

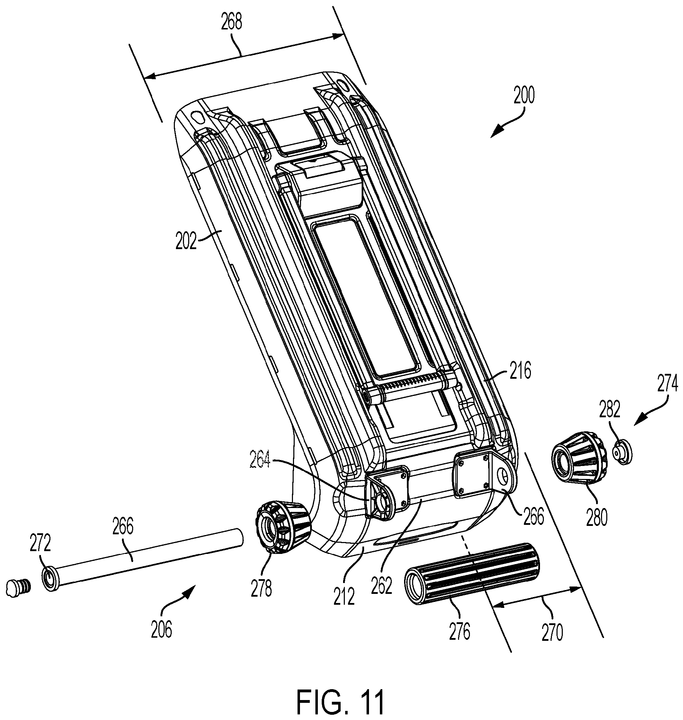

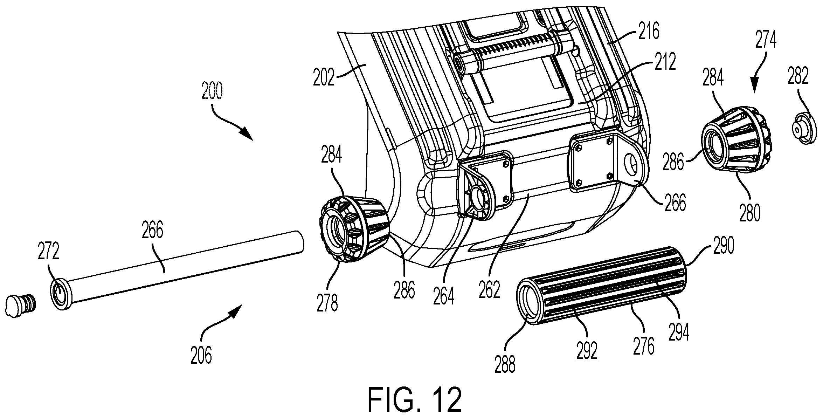

FIGS. 11 and 12 further illustrate the frame 200, more specifically the wheel module 206 thereof. The wheel module 206 is positioned toward a bottom corner 262 of the body 202 of the frame 200, the bottom corner 262 being between the bottom 212 and the back side 216 of the body 202. The wheel module 206 includes a first bracket 264 and a second bracket 266 coupled, for example, releasably secured, to the body 202 of the frame 200. The wheel module 206 further includes an axle 266 arranged along the width 268 (FIG. 11) of the body 202 and perpendicular to the height 270 (FIG. 11) of the body 202. The axle 266 is coupled to the first bracket 264 and the second bracket 266. The axle 266 may have a hollow interior 272 that is accessible to a user without removing the axle 266 from the body 202. A wheel assembly 274 is rotatably mounted on the axle 266 and includes a plurality of roller elements rotatably positioned on the axle 266. The roller elements include a central roller 276, a first side wheel 278, and a second side wheel 280. The axle 266 may be detachably mounted to the body 202 by rotatably securing the first side wheel 278 and/or the second side wheel 280 to the axle 266. Additionally or alternatively, a cap 282 maintains the roller elements on the axle 266. A securing element may releasably couple the cap 282 to the axle 266, and the securing element may be manually releasable such that the cap 282, the axle 266, and the roller elements can be disassembled from the frame 200. The securing element may be, for example, a fastener, and such a fastener may be an internal or external threaded surface formed by the cap 282.

With specific reference to FIG. 12, the central roller 276, the first side wheel 278, and the second side wheel 280 may be provided in various arrangements or forms. For example and as illustrated, the central roller 276 is positioned between the first bracket 264 and the second bracket 266. The first side wheel 278 and the second side wheel 280 are positioned on opposite sides of the central roller 276, the first bracket 264, and the second bracket 266. The first side wheel 278 and/or the second side wheel 280 may be tapered in diameter. More specifically, the first side wheel 278 and/or the second side wheel 280 taper from a first, outer diameter 284 to a second, inner diameter 286 that is less than the first, outer diameter 284. The first side wheel 278 and the second side wheel 280 may be disposed in opposing fashion - that is, with the second, inner diameters 286 being closer to each other than the first, outer diameters 284. The first side wheel 278 and/or the second side wheel 280 may have, or taper to, a larger diameter than central roller 276. More specifically, the first side wheel 278 and/or the second side wheel 280 may have a diameter that is larger than the central roller 276 by at least 10%, even more specifically by at least 20%, and even more specifically by at least 25%. The larger diameter of the first side wheel 278 and/or the second side wheel 280 may be the first, outer diameter 284. The central roller 276 may be shaped as an elongate cylinder. Stated another way, the central roller 276 has a first end 288 and a second end 290, and, as illustrated, the central roller 276 may define a continuous diameter 292 (that is, a non-tapering diameter) between the first end 288 and the second end 290. Though shown with a continuous diameter 292, the central roller 276 may also include tapers and other diametric features (not shown). The diameter 292 of the central roller 276 may correspond to a diameter of the first side wheel 278 and/or the second side wheel 280, such as the second, inner diameter 286 of each of the first side wheel 278 and/or the second side wheel 280 (as used herein, "corresponding to" and variations thereof meaning approximately equal). As illustrated, the central roller 276, the first side wheel 278 and/or the second side wheel 280 may include tread features 294.

One or more components of the wheel module 206 may form part of a wheel module kit that is selectively attachable to the bottom corner 262 of the frame 200. For example, the central roller 276, the first side wheel 278, and/or the second side wheel 280 may be part of a plurality of interchangeable wheels that are selectively attachable to the frame 200. The interchangeable wheels may include various first side wheels 278 and/or second side wheels 280 that have different features, such as, for example, wheel diameter, wheel shape, wheel material, and/or wheel tread type. The interchangeable wheels may additionally or alternatively include various central rollers 276 that have different features, such as, for example, roller diameter, roller shape, roller material, roller tread type, and/or roller length. Such interchangeable wheels may be suitable, for example, for navigating different types of terrain, such as rocky surfaces, soft dirt surfaces, and the like. The wheel module kit may further include one or more axles 266, one or more caps 282, one or more securing elements or a combination thereof.

A method of changing a wheel module of a pack system, according to some embodiments, is as follows. Reference is made to FIGS. 11 and 12 and the illustrated frame 200, although it is understood that the same or similar methods could be used with any of the frame assemblies contemplated herein. First, the securing element, or the cap 282, is released from the second side wheel 280 of the wheel module 206. Next, the second side wheel 280 is removed from the axle 266, and the first side wheel 278is then removed from the axle 266. The axle 266 and/or the central roller 276 may also be removed. Next, a replacement axle (not shown) and/or a replacement central roller (not shown) may be coupled to the frame 200, and a first replacement wheel (not shown) and a second replacement wheel (not shown) are coupled to the axle 266. The first replacement wheel and/or the second replacement wheel may have different features from the first side wheel 278 and/or the second wheel side wheel 280, respectively. Such features may include, for example, wheel diameter, wheel shape, wheel material, and/or wheel tread type. Similarly, the replacement central roller may have different features from the central roller 276. Such features may include, for example, roller diameter, roller shape, roller material, roller tread type, and/or roller length.

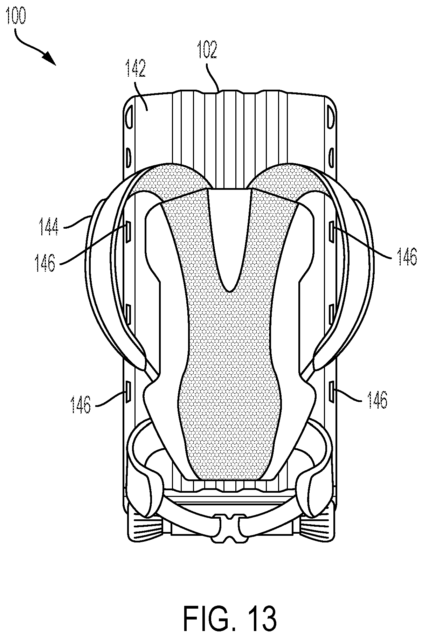

As described above, the pack system 100 is convertible or transitionable to different configurations in which the pack system 100 may be used in different manners. FIG. 1 illustrates the pack system 100 in the first luggage configuration, and FIG. 2 illustrates the pack system 100 being transitioned from the first luggage configuration to a second pack configuration. FIG. 13 illustrates the pack system 100 in the second pack configuration. In the second pack configuration, the pack assembly 102 (shown elsewhere) is detached from the frame 104, and a strap harness assembly 144 is secured through a plurality of harness apertures 146 of the frame 104. In some embodiments, the harness apertures 146 may be or include the apertures that receive the collars of the receiver (shown elsewhere). The strap harness assembly 144 may be constructed of various materials, such as one or more fabrics or the like. The strap harness assembly 144 and the frame 104 may be worn in a similar manner to a backpack. More specifically, the strap harness assembly 144 may be positioned on the back side 142 of the frame 104 and worn by a user, and a load of one or more items, such as the pack assembly 102, harvested animals or plants, may be secured to the front side 115 (shown elsewhere) of the frame 104, for example, via one or more straps or ropes (not shown), and thereby carried by the user.

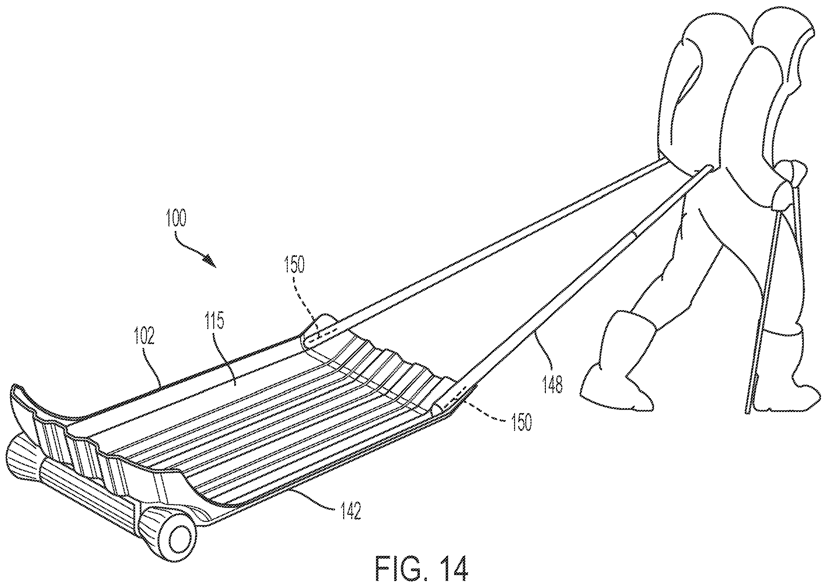

The pack system 100 is also transitionable to various other configurations. For example, FIG. 14 illustrates the pack system 100 in a third sled configuration. In the third sled configuration, the pack assembly 102 (shown elsewhere) is detached from the frame 104, and a tether assembly 148 is secured through a plurality of tether apertures 150 of the frame 104. The frame 104 may be pulled via the tether assembly 148 in a similar manner to a sled. More specifically, the frame 104 may be pulled via the tether assembly 148 behind the user and with the back side 142 of the frame 104 sliding across a ground surface. A load of one or more items, such as the pack assembly 102, harvested animals or plants, may be secured to the front side 115 of the frame 104, for example, via one or more straps or ropes (not shown), and thereby towed by the user.

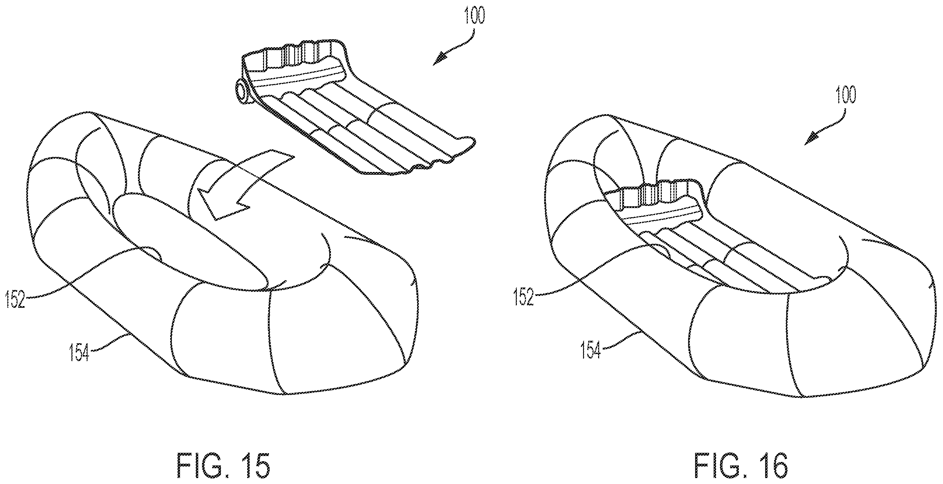

As another example, FIG. 15 illustrates the pack system 100 being transitioned to a fourth raft configuration, and FIG. 16 illustrates the pack system 100 in the fourth raft configuration. In the fourth raft configuration, the pack assembly 102 (shown elsewhere) is detached from the frame 104, and the frame 104 is positioned in a seating area 152 of an inflatable raft 154. The frame 104 may define a complementary fit to the seating area 152 of the raft 154 (as used herein, a "complementary fit" meaning that two components have approximately equal perimeter sizes). One or more users and one or more items may be carried by the frame 104 and the raft 154. In other configurations, the raft 154 may be deflated and carried in the pack assembly 102.

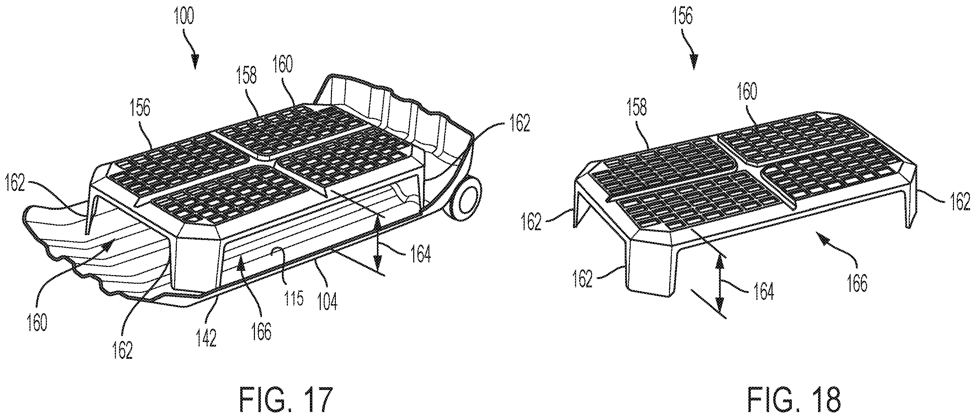

As yet another example, FIG. 17 illustrates the pack system 100 in a fifth table configuration in which the frame 104 supports an inner table 156, and FIG. 18 illustrates the inner table 156. The inner table 156 may be constructed of various materials, such as one or more plastics, metals, composites, or the like. The inner table 156 includes a raised work surface 158 having a top 160 and a bottom (not shown). A plurality of supports 162 extend from the bottom of the surface 158. The inner table 156 defines an overall height 164 and a free space 166 between the plurality of supports 162 and the bottom of the surface 158. The inner table 156 may be formed of a material resistant to deformation at a temperature of at least 100 degrees Celsius. The inner table 156 may be able to support a weight in the range of from 2 to 100 kilograms (kg) or from 2 to 50 kg. In the fifth table configuration, the plurality of supports 162 are received entirely within the receiving space 120 of the frame 104 (FIG. 17), and the plurality of supports 162 engage the front side 115 of the frame 104. The back side 142 of the frame 104 engages a ground surface.

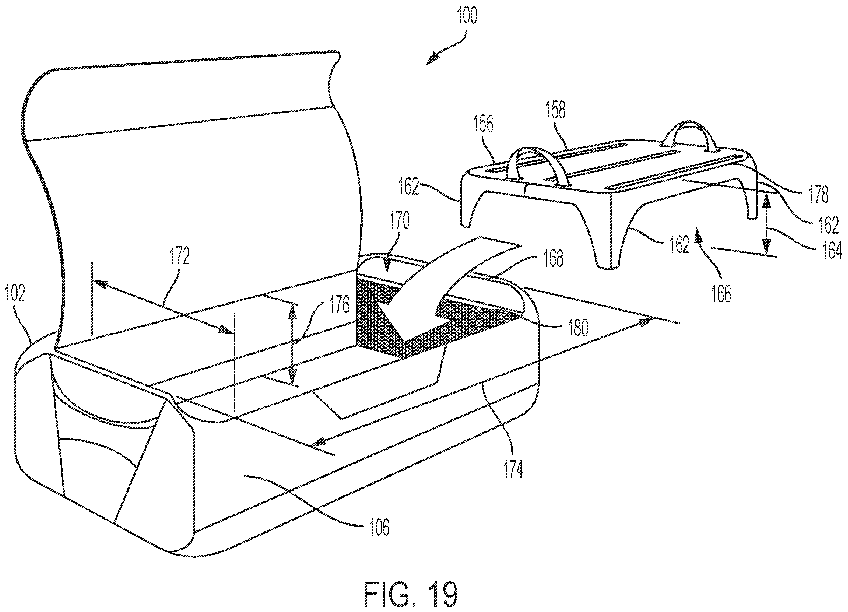

In other configurations, the inner table 156 may be carried in the pack assembly 102. More specifically and referring to FIG. 19, the inner table 156 is movable through the access opening 168 of the interior space 170 of the shell 106 of the pack assembly 102, and the inner table 156 is receivable entirely within the interior space 170 of the shell 106 of the pack assembly 102. The plurality of supports 162 may be spaced apart to span a width dimension 172 and a length dimension 174 of the interior space 170 of the shell 106. More specifically, the plurality of supports 162 may be spaced apart such that the free space 166 defined by the inner table 156 is between 5% and 95% of the interior space 170 of the shell 106. The plurality of supports 162 and the raised work surface 158 may also be sized such that the inner table 156 spans a height dimension 176 of the interior space 170 of the shell 106. More specifically, the overall height 164 of the inner table 156 may span between 10% and 100% of the height dimension 176 of the interior space 170 of the shell 106. Similarly, the surface 158 of the inner table 156 may have an outer profile 178 that corresponds to an overall shape 180 of the interior space 170 to define a complementary fit between the surface 158 and the interior space 170 of the shell 106. As a result, the inner table 156 may generally span the entirety of the interior space 170 of the shell 106. In some cases, the inner table 156 is invertibly positionable in the interior space 170 of the shell 106. Stated another way, the inner table 156 positionable in the interior space 170 with (1) the access opening 168 closed and the plurality of supports 162 in a first downward orientation, and (2) with the plurality of supports 162 in a second upward orientation that is inverted relative to the first downward orientation.

A method of transitioning a pack system from a first configuration to a second configuration, according to some embodiments, is as follows. Reference is made to FIGS. 1, 2, 13, and 14 and the illustrated pack system 100, although it is understood that the same or similar methods could be used with any of the pack systems contemplated herein. First, the pack assembly 102 is detached from the frame 104. More specifically, the tracks 126 and 128 of the pack assembly 102 may be slid along the rails 122 and 124 of the frame 104 until the tracks 126 and 128 and rails 122 and 124 are released from one another. Next, the strap harness assembly 144 and/or the tether assembly 148 are secured to the frame 104 and/or the pack assembly 102. The strap harness assembly 144 may be secured to the body 108 of the frame 104 through the plurality of harness apertures 146, and/or the tether assembly 148 may be secured to the body 108 through the plurality of tether apertures 150. A load may then be secured in the receiving space 120 of the frame 104.

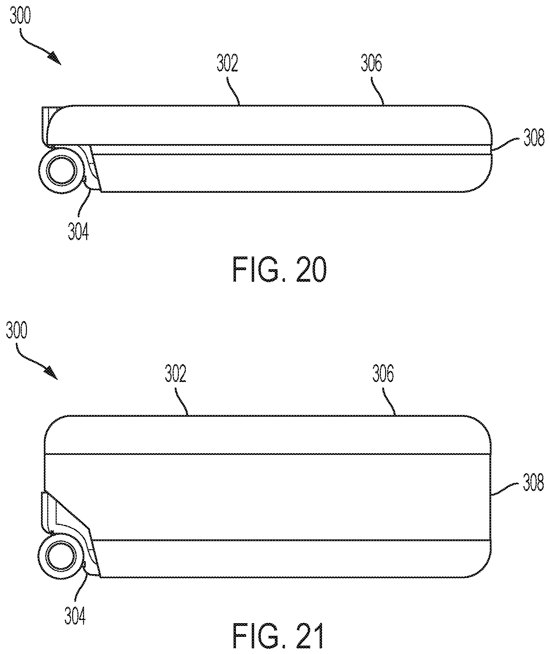

The pack assembly 102 shown in FIGS. 1 and 2 is provided as an example of the various features of the convertible pack system and, although the combination of those illustrated features is clearly within the scope of invention, that example and its illustration is not meant to suggest the inventive concepts provided herein are limited from fewer features, additional features, or alternative features to one or more of those features shown in FIGS. 1 and 2. For example, in various embodiments, the pack assembly 102 shown in FIGS. 1 and 2 may include the expandable and collapsible portion 308 described with reference to FIGS. 20 and 21. It should also be understood that the reverse is true as well. That is, one or more of the components depicted in FIGS. 1 and 2 can be employed in addition to, or as an alternative to components depicted in FIGS. 20 and 21.

FIGS. 20 and 21 illustrate a convertible pack system 300, according to some embodiments. The pack system 300 generally includes a pack assembly 302 that releasably couples to a frame 304. The frame 304 may be the same as or similar to any of the frame assemblies contemplated herein, including the frame 104 or the frame 200. The pack assembly 302 may be similar to any of the pack assemblies contemplated herein, including the pack assembly 102, except that the shell 306 includes an expandable and collapsible portion 308. The expandable and collapsible portion 308 is selectively expandable and collapsible to vary the size of the interior space (not shown) of the shell 306. The expandable and collapsible portion 308 may be expanded or collapsed while the pack assembly 302 is attached to or detached from the frame 304.

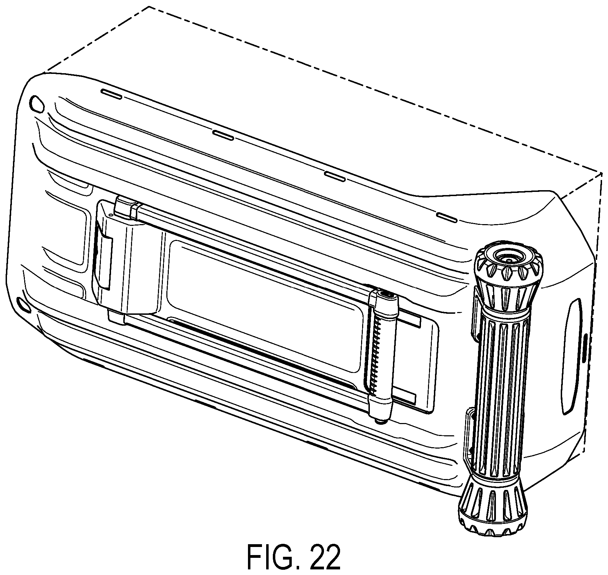

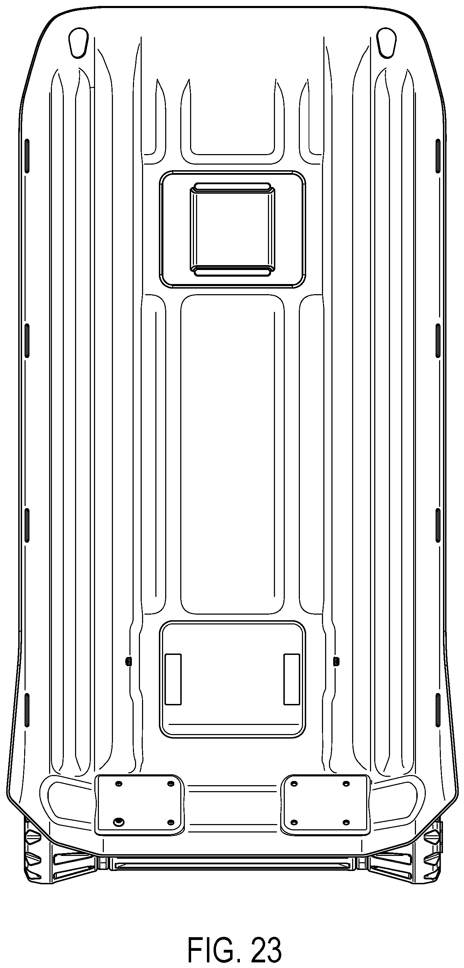

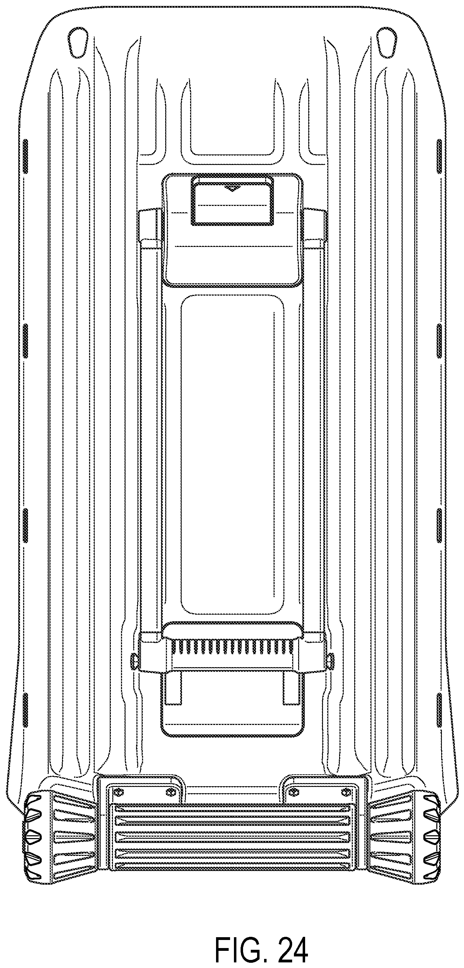

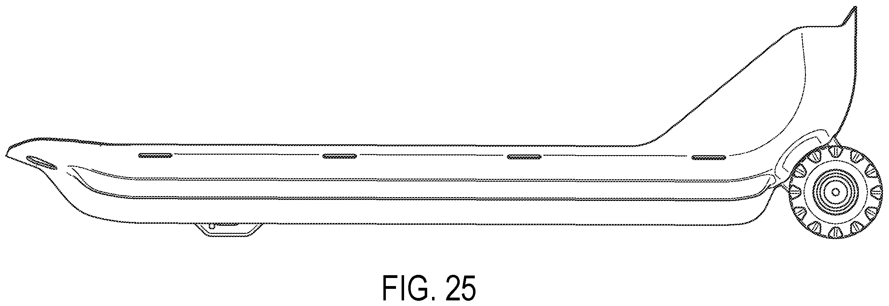

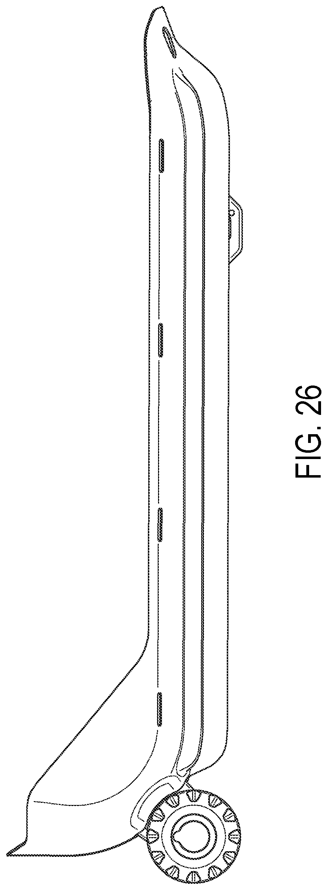

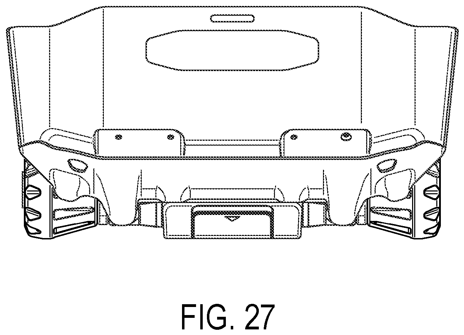

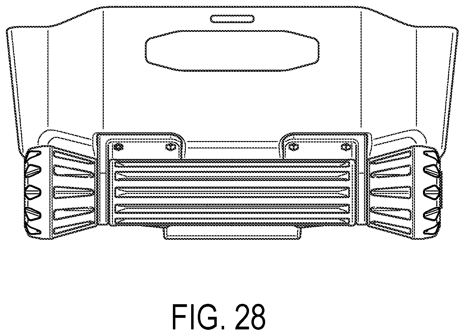

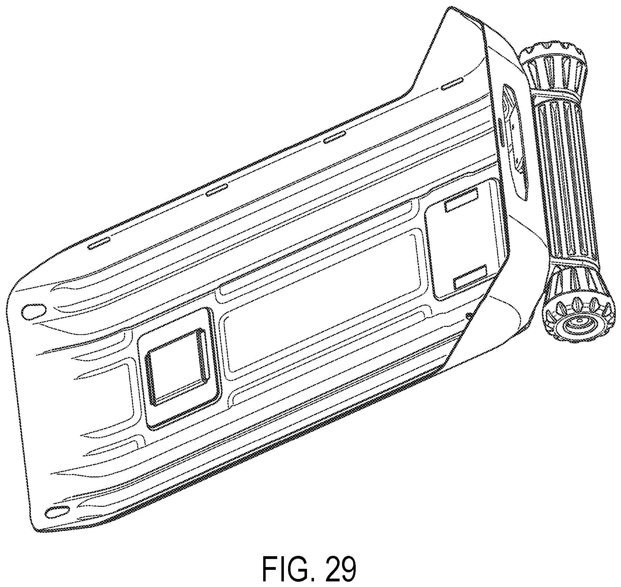

FIGS. 22-29 are views of a pack system frame, illustrating my new design. The pack illustrated in broken lines in FIG. 22 is an environment of the pack system frame that forms no part of the claimed design.

The invention of this application has been described above both generically and with regard to specific embodiments. It will be apparent to those skilled in the art that various modifications and variations can be made in the embodiments without departing from the scope of the disclosure. Thus, it is intended that the embodiments cover the modifications and variations of this invention provided they come within the scope of the appended claims and their equivalents.

The following numbered clauses describe further aspects of the invention.
1. A handle assembly comprising:
   a handle comprising a hand grip, a base comprising a pivot shaft, and a shank extending between the hand grip and the base; and
   a coupling module configured to releasably couple the handle base to a frame of a luggage system such that the handle can be pivoted, the coupling module comprising:
      a receiver comprising a first collar with a first mouth, the pivot shaft receivable in the first mouth of the first collar, and
      a lock mechanism releasably securable to at least one of the receiver and the pivot shaft such that the pivot shaft is secured in the first mouth of the collar, the lock mechanism comprising a latch is manually operable to lock and unlock the lock mechanism.
2. The handle assembly of clause1, wherein the shank of the handle comprises a first leg and a second leg, the first and second legs extending between the hand grip and the base.
3. The handle assembly of clause 1 or 2, wherein the pivot shaft is cylindrical in shape.
4. The handle assembly of any of clauses 1 to 3, wherein the receiver further comprises a second collar with a second mouth, the pivot shaft receivable in the second mouth of the second collar.
5. The handle assembly ofclause4, wherein the first and second collars are interconnected by a backing member.
6. The handle assembly of any of clauses 1 to 5, wherein the coupling module is receivable over the pivot shaft and the first collar, and the latch is operable to engage with and disengage from the pivot shaft to retain and release, respectively, the coupling module over the pivot shaft and the first collar upon actuating the latch.
7. A pack system comprising:
   a frame comprising a body comprising a back side, a front side, and a first aperture extending through the body; and
   a handle assembly comprising,
      a handle comprising a hand grip, a base comprising a pivot shaft, and a shank extending between the hand grip and the base; and
      a coupling module configured to releasably couple the handle base to the body of the frame such that the handle can be pivoted, the coupling module comprising,
         a receiver comprising a first collar received through the first aperture of the body of the frame, the first collar comprising a first mouth, the pivot shaft pivotably received in the first mouth of the first collar, and
         a lock mechanism releasably secured to at least one of the receiver and the pivot shaft such that the pivot shaft is secured in the first mouth of the collar, the lock mechanism comprising a latch that is manually operable to lock and unlock the lock mechanism.
8. The pack system of clause 7, wherein the body of the frame comprises a second aperture, and the receiver further comprises a second collar with a second mouth, the pivot shaft received in the second mouth of the second collar.
9. The pack system of clause 8, wherein the first and second apertures pass through the body of the frame, and further wherein the first and second collars are interconnected by a backing member, the backing member engaging the front side of the body of the frame and the first and second collars projecting through the first and second apertures away from the back side of the body of the frame.
10. The pack system of any of clauses 7 to 9, wherein the coupling module comprises a body portion received over the pivot shaft and the first collar, and the lock mechanism comprises a latch releasably engaged with the pivot shaft to releasably retain the body portion over the pivot shaft and the first collar such that the handle assembly is releasably secured to the body of the frame.
11. The pack system of any of clauses 7 to 10, wherein the back side of the body of the frame defines a recessed area, and further wherein the handle of the handle assembly is pivotable into the recessed area of the body.
12. The pack system of any of clauses 7 to 11, wherein the handle of the handle assembly is pivotable through an angle of 90 degrees or more.
13. The pack system of any of clauses 7 to 12, wherein the handle of the handle assembly is pivotable through an angle of about 180 degrees.
14. The pack system of any of clauses7 to 13, wherein the handle is pivotable flat against the back side of the body of the frame.
15. A pack system comprising:
   a frame comprising a body; and
   a handle assembly comprising,
      a handle comprising a hand grip, a base, and a shank extending between the hand grip and the base, and
      a coupling module configured to releasably couple the base of the handle to the body of the frame such that the handle can be pivoted between a first angular position and a second angular position, wherein the first and second angular positions are angularly offset by 90 degrees or more, the coupling module being manually releasable to uncouple the handle assembly from the body of the frame.
16. The pack system of clause 15, wherein the body comprises a top, a bottom, a back side, and a front side, the handle assembly being coupled to the body by the coupling module such that the handle is pivotable toward the bottom of the body against the back side of the body.
17. The pack system of clause 15 or 16, wherein the handle is pivotable toward the top of the body against the back side of the body such that the handle extends beyond the top of the body.
18. The pack system of any of clauses 15 to 17, wherein the back side of the body defines a recessed area sized and shaped to receive the handle.
19. The pack system of any of clauses 7 to 18, further comprising a pack assembly releasably coupled to the frame.
20. The pack system of clause 19, wherein the pack assembly comprises a track and the body of the frame comprises a rail, the track and the rail being slidably mated such that the pack assembly is coupled to the frame.
21. The pack system ofclause20, wherein the body of the frame comprises a back side of the body, and a foot portion projecting from the back side of the body, the foot portion defining the bottom of the body.
22. The pack system of clause 21, wherein the pack assembly is slidably mated over the rail and against the foot portion.
23. A pack system comprising:
   a frame comprising a body comprising a longitudinal mid-line, the body comprising a bottom, a back side, and a bottom corner between the bottom and back side; and a wheel module positioned toward the bottom corner of the body, the wheel module comprising,
      a bracket coupled to the body of the frame,
      an axle received through the bracket,
      a plurality of roller elements rotatably received on the axle, and
      a securing element being manually releasable such that the axle and the plurality of roller elements can be disassembled from the body of the frame.
24. The pack system of clause23, wherein the bracket is releasably secured to the body of the frame.
25. The pack system of clause 23 or 24, wherein the securing element is a fastener.
26. The pack system of any of clauses 23 to 25, wherein the axle comprises a hollow interior that is accessible to a user without removing the axle from the body.
27. The pack system of any of clauses 23 to 26, wherein the plurality of roller elements comprises a first side wheel, a second side wheel, and a central roller, the first and second side wheels rotatably positioned on the axle on opposite sides of the central roller.
28. The pack system of any of clauses 23 to 27, wherein the axle is detachably mounted to the body by rotatably securing the securing element to the axle.
29. The pack system of any of clauses 27 or 28, wherein the bracket is a first bracket, further comprising a second bracket coupled to the body of the frame, and wherein the central roller extends from the first bracket to the second bracket.
30. A pack system comprising:
   a frame comprising a body comprising a longitudinal mid-line, the body comprising a height and a width and comprising a bottom, a back side, and a bottom corner between the bottom and back side; and
   a wheel module positioned toward the bottom corner of the body, the wheel module comprising,
      an axle arranged along the width of the body, and
      a wheel assembly positioned at the bottom of the body, wheel assembly being rotatably mounted on the axle, the wheel assembly comprising a central roller and a pair of wheels each comprising a larger diameter than central roller.
31. The pack system of clause 30, wherein the central roller comprises roller tread features.
32. The pack system of clause 30 or 31, wherein the pair of wheels each comprises a diameter that is larger than the central roller by at least 10%.
33. The pack system of any of clauses 30 to 32, wherein the central roller comprises a first end and a second end, and further wherein the central roller defines a continuous diameter between the first end and the second end.
34. A pack system comprising:
   a frame comprising,
   a body comprising a longitudinal mid-line and a width, the body comprising a bottom, a back side and a bottom corner between the bottom and back side; and
   a wheel module positioned toward the bottom corner of the body, the wheel module comprising,
      an axle extending along the width of the body, and
      a wheel assembly positioned at the bottom of the body, wheel assembly being rotatably mounted on the axle, the wheel assembly comprising a central roller and a pair of wheels, each of the pair of wheels being tapered in diameter.
35. The pack system of clause 34, wherein each of the pair of wheels tapers from a first, outer diameter to a second, inner diameter that is less than the first, outer diameter.
36. The pack system of clause 35, wherein the second, inner diameter of each of the pair of wheels corresponds to a diameter of the central roller.
37. A pack system comprising:
   a frame comprising a body comprising a longitudinal mid-line and a width, the body comprising a bottom, a back side, and a bottom corner between the bottom and back side; and
   a wheel module positioned toward the bottom corner of the body, the wheel module comprising,
      an axle extending along a width of the body, and
      a wheel assembly positioned at the bottom of the body, wheel assembly being rotatably and removably mounted on the axle, the wheel assembly comprising a pair of wheels arranged in an opposing fashion, each tapering toward the other from a first, larger diameter to a second, smaller diameter.
38. The pack system of clause37, wherein the first, larger diameter is at least 10% greater than the second, smaller diameter.
39. The pack system of clause 37 or 38, further comprising a central roller positioned between the pair of wheels.
40. The pack system ofclause39, wherein the central roller comprises the shape of an elongate cylinder that defines an outer diameter, and further wherein the outer diameter of the central roller corresponds to the second, smaller diameter.
41. A wheel module replacement kit for a pack system, the kit comprising:
   an axle;
   a wheel assembly configured to be rotatably mountable on the axle, the wheel assembly comprising a plurality of wheels having different features wherein the wheel features comprise wheel diameters tapering from a first larger diameter to a second, smaller diameter, and the wheel features further comprising one or more of wheel diameter, wheel shape, wheel material, and wheel tread type; and
   a fastener coupleable to at least one of the plurality of wheels to secure a pair of the interchangeable wheels to the axle.
42. The wheel module replacement kit of clause 41, further comprising a central roller that is elongate and cylindrical in shape.
43. The wheel module replacement kit of clause 41, further comprising a plurality of interchangeable central rollers comprising different features selected from one or more of roller diameter, roller shape, roller material, roller tread type, and roller length.
44. A method of changing a wheel module of a pack system, the method comprising:
   releasing a fastener of the wheel module from a first wheel of a pair of wheels of the wheel module;
   removing the first wheel of the pair of wheels from an axle that extends a width of a body of a frame of the pack system;
   removing a second wheel of the pair of wheels of the wheel module from the axle;
   coupling a first replacement wheel and a second replacement wheel to the axle, the first and second replacement wheels comprising different features from the first and second wheels selected from one or more of wheel diameter, wheel shape, wheel material, and wheel tread type; and
   securing the fastener of the wheel module to the first replacement wheel.
45. The method of clause 44, further comprising securing a central roller that is elongate and cylindrical in shape between the first and second replacement wheels.
46. The method of clause 45, further comprising selecting the central roller from a plurality of interchangeable central rollers comprising different features selected from one or more of roller diameter, roller shape, roller material, roller tread type, and roller length.
47. The pack system of any of clauses23 to 40, further comprising a pack assembly releasably coupled to the frame.
48. The pack system ofclause47, wherein the pack assembly comprises a track and the body of the frame comprises a rail, the track and the rail being slidably mated such that the pack assembly is coupled to the frame.
49. The pack system ofclause48, wherein the body of the frame comprises a back side, and a foot portion projecting from the back side of the body, the foot portion defining the bottom of the body.
50. The pack system of clause49, wherein the pack assembly is slidably mated over the rail and against the foot portion.
51. A pack system comprising:
   a frame comprising a body comprising a bottom, a back, and a bottom corner between the bottom and back, the back and the bottom frame defining a receiving space; and
   a pack assembly releasably coupled in the receiving space of the frame, the pack assembly comprising,
      a shell comprising an interior space defining a height dimension, a width dimension and a length dimension, and an overall shape, and an access opening that is able to be opened and closed to permit and restrict access to the interior space; and
      an inner table comprising a surface having a top and a bottom and a plurality of supports extending from the bottom of the surface, the inner table defining an overall height and a free space between the plurality of supports and the bottom of the surface,
      the inner table being receivable entirely within the interior space of the shell and the plurality of supports being receivable entirely within the receiving space of the frame.
52. The pack system of clause 51, wherein the inner table is able to be positioned in the interior space with the access opening closed with plurality of supports in a first orientation as well as with the plurality of supports in a second orientation that is inverted relative to the first orientation.
53. The pack system of clause 51 or 52, wherein the plurality of supports are spaced apart to span the width and length dimensions of the interior space of the shell.
54. The pack system of any of clauses 51 to 53, wherein the surface comprises an outer profile that corresponds to the overall shape of the interior space to define a complementary fit between the surface and the interior space of the shell.
55. The pack system of any of clauses 51 to 54, wherein the overall height of the inner table spans between 10% and 100% of the height dimension of the interior space.
56. The pack system of any of clauses51 to 55, wherein the free space is between 5% and 95% of the interior space.
57. The pack system of any of clauses 51 to 56, wherein the table is formed of a material resistant to deformation at a temperature of 100 degrees Celsius.
58. The pack system of any of clauses 51 to 57, wherein the table is able to support 2 to 100 kilograms (kg).
59. A pack system comprising:
   a frame comprising a body comprising a bottom, a top, a back side, and a bottom corner between the bottom and back side, the top and bottom curving away from the back to define a receiving space;
   a wheel module positioned toward the bottom corner of the body; and
   a pack assembly releasably coupled in the receiving space of the frame.
60. The pack system of clause 59, wherein the back side is configured to lay flat on a flat surface.
61. The pack system ofclause 59 or 60, the back side comprising a plurality of ridges to reduce sliding friction of the frame over a surface.
62. The pack system of any of clauses 59 to 61, the body comprising a plurality of apertures, the system further comprising a strap harness assembly secured to the body through the plurality of apertures.
63. The pack system ofclause62, the system further comprising a tether assembly secured to the body through the plurality of apertures.
64. The pack system of any of clauses 59 to 63, wherein the system further comprises a raft, the raft comprising a seating area, the frame defining a complementary fit to the seating area of the raft.
65. A method of transitioning a pack system from a first luggage configuration to a second pack configuration, the method comprising:
   detaching a pack assembly from a receiving space of a frame, the frame comprising a body having a bottom, a top, a back side, and a bottom corner between the bottom and back side, the top and bottom curving away from the back to define the receiving space; and
   securing at least one of a strap harness assembly and a tether assembly to at least one of the frame and the pack assembly.
66. The method of clause 65, wherein the body of the frame comprises a plurality of apertures, the strap harness assembly being secured to the body through the plurality of apertures.
67. The method of clause 65 or 66, wherein the body comprises a plurality of tether apertures at the top of the body, the tether assembly being secured to the body of the frame through the tether apertures.
68. The method of clauses 65 to 67, wherein detaching the pack assembly from the receiving space of the frame includes sliding a track of the pack assembly along a rail of the frame, the track and rail forming a complementary fit such that the track and rail are releasably attached, until the track and rail are released from one another.
69. The method of clauses65 to 68, wherein the body of the frame comprises a back side, and a foot portion projecting from the back side of the body, the foot portion defining the bottom of the body and the back side of the body defines a first edge and a second edge, and the pack assembly is slidably mated over the first and second edges and against the foot portion of the body of the frame, and further wherein detaching the pack assembly from the frame comprises sliding the pack assembly from the frame.
70. The method of any of clauses 65 to 69, further comprising securing a load in the receiving space of the frame.

## Claims

1. A pack system comprising:
a frame comprising a body comprising a bottom, a back, and a bottom corner between the bottom and back, the back and the bottom frame defining a receiving space; and
a pack assembly releasably coupled in the receiving space of the frame, the pack assembly comprising,
a shell comprising an interior space defining a height dimension, a width dimension and a length dimension, and an overall shape, and an access opening that is able to be opened and closed to permit and restrict access to the interior space; and
an inner table comprising a surface having a top and a bottom and a plurality of supports extending from the bottom of the surface, the inner table defining an overall height and a free space between the plurality of supports and the bottom of the surface,
the inner table being receivable entirely within the interior space of the shell and the plurality of supports being receivable entirely within the receiving space of the frame.

2. The pack system of claim 1, wherein the inner table is able to be positioned in the interior space with the access opening closed with plurality of supports in a first orientation as well as with the plurality of supports in a second orientation that is inverted relative to the first orientation.

3. The pack system of claims 1 or 2, wherein the plurality of supports are spaced apart to span the width and length dimensions of the interior space of the shell.

4. The pack system of any of claims 1 to 3, wherein the surface comprises an outer profile that corresponds to the overall shape of the interior space to define a complementary fit between the surface and the interior space of the shell.

5. The pack system of any of claims 1 to 4, wherein the overall height of the inner table spans between 10% and 100% of the height dimension of the interior space.

6. The pack system of any of claims 1 to 5, wherein the free space is between 5% and 95% of the interior space.

7. The pack system of any of claims 1 to 6, wherein the table is formed of a material resistant to deformation at a temperature of 100 degrees Celsius.

8. The pack system of any of claims 1 to 7, wherein the table is able to support 2 to 100 kilograms (kg).
